Europäisches Patentamt

**European Patent Office**

**Office européen des brevets**

(19)

(11) Publication number: **0 252 761 B1**

# EUROPEAN PATENT SPECIFICATION

(45) Date of publication of patent specification: **19.06.91**    (51) Int. Cl.5: **B01J 29/08**, C10G 11/05

(12)

(21) Application number: **87306150.1**

(22) Date of filing: **10.07.87**

(54) Hydrocarbon cracking catalysts and processes utilizing the same.

(30) Priority: **11.07.86 US 884522**

(43) Date of publication of application:
**13.01.88 Bulletin 88/02**

(45) Publication of the grant of the patent:
**19.06.91 Bulletin 91/25**

(84) Designated Contracting States:
**BE DE FR GB IT NL**

(56) References cited:
**EP-A- 0 095 364**
**EP-A- 0 109 187**
**EP-A- 0 185 500**
**US-A- 4 356 338**

(73) Proprietor: **EXXON RESEARCH AND ENGI-
NEERING COMPANY**
**P.O.Box 390, 180 Park Avenue**
**Florham Park, New Jersey 07932(US)**

(72) Inventor: **Scheutte, William Lee**
**3711 Hyacinth Avenue**
**Baton Rouge Louisiana 70806(US)**
Inventor: **Pine, Lloyd Albert**
**5858 Berkshire Drive**
**Baton Rouge Louisiana 70806(US)**

(74) Representative: **Somers, Harold Arnold et al**
**ESSO Engineering (Europe) Ltd. Patents &
Licences Mailpoint 72 Esso House Ermyn
Way**
**Leatherhead, Surrey KT22 8XE(GB)**

**Description**

BACKGROUND OF THE INVENTION

1. Field of the Invention

The present invention relates to a catalyst and its use in a catalytic cracking process. More particularly, the present invention relates to a cracking catalyst that minimizes coke production.

2. Description of Information Disclosures

Hydrocarbon cracking catalysts comprising a zeolite and discrete particles of phosphorus-treated alumina dispersed in an inorganic oxide matrix are known. See, for example, U.S. Patent 4,567,152.

U.S. Patent 4,456,780 discloses a hydrocarbon disproportionation process using a zeolite having a silica to alumina ration of at least 12 which has been pretreated with a phosphorus-containing compound and which may additionally have been steamed prior to said treatment.

EP-A-0 109 187 and EP-A-0 095 364 (corresponding to U.S. Patent 4,454,241) disclose a phosphorus-containing zeolitic catalyst made from a clay starting material. The catalyst is obtained by contacting a partially cation exchanged calcium zeolite-containing catalyst with a dihydrogen phosphate anion, e.g., ammonium hydrogen phosphate or dihydrogen phosphite anion.

U.S. Patent 4,430,199 discloses passivation of contaminant metals on cracking catalyst by phosphorus addition. The phosphorus compound may be ammonium hydrogen phosphate. The phosphorus compound may be impregnated on an inert carrier such as calcined metakaolin clay that can be blended with the catalyst or added to the catalyst. See column 3, lines 17 to 20, and column 10, lines 20 to 25.

It has now been found that a catalytic cracking process utilizing catalysts comprising zeolites that have been pretreated with certain phosphorus compounds will produce less coke and gas relative to utilizing the same catalyst that does not comprise a phosphorus-treated zeolite.

SUMMARY OF THE INVENTION

In accordance with the invention there is provided, a catalyst comprising (a) a non-zeolitic inorganic oxide matrix, and (b) an ultrastable Y-type crystalline zeolite, said zeolite having been pretreated by contacting said zeolite with a phosphorus compound selected from the group consisting of phosphoric acid, phosphorous acid, a salt of phosphoric acid, a salt of phosphorous acid and mixtures thereof for a time sufficient to composite an effective amount of phosphorous with said zeolite.

Furthermore, in accordance with the invention, there is also provided a catalytic cracking process utilizing the above-stated catalyst.

DETAILED DESCRIPTION OF THE INVENTION

The catalyst of the invention comprises a phosphorous treated ultrastable Y-type zeolite and a non-zeolitic inorganic oxide matrix.

THE ZEOLITE COMPONENT

Suitable zeolites for use as component of the catalyst of the present invention are ultrastable Y-type zeolites described, for example, in U.S. Patent Reissue 28,629 (Reissue of U.S. Patent 3,402,996); U.S. Patent 4,036,739; U.S. Patent 2,781,199. In general "ultrastable" with reference to a Y-type zeolite refers to a zeolite which is resistant to degradation of crystallinity by high temperature and steam treatment and which has a unit cell size below 2.45nm and a low alkali metal content. The silica to alumina mole ratio of ultrastable Y-type zeolites is at least about 3:1. The ultrastable Y-type zeolite may be ion exchanged with various cations such as rare earth metals, calcium, magnesium, hydrogen, hydrogen precursors and mixtures thereof as is known in the art. The concentration of hydrogen cation in the finished zeolite will be that concentration equivalent to the difference between the theoretical cation concentration of the particular zeolite and the amount of cation present in the form of exchanged metal cation and a residual alkali metal cation. The final zeolite may be composited with other catalytic metal components, such as metals of Groups IIA, IIIA, IB, IIB, IIIB, IVB, VIII of the Periodic Table of Elements by vapor phase deposition, impregnation, etc. The Periodic Table of Elements referred to herein is given in The Handbook of Chemistry and Physics, published by The Chemical Rubber Publishing Company, Cleveland, Ohio, 45th Edition, 1964. The particle size of the zeolite component may range from about 0.1 to 10 microns, preferably from about 0.5 to 3 microns. Suitable amounts of zeolite component in the total catalyst will range from about 1 to about 60, preferably from about 1 to about 40, more preferably from about 5 to about 40 wt. % based on the total catalyst. The zeolite is contacted with the phosphorus compound for a time sufficient to composite an effective amount of phosphorus with the zeolite. By "effective amount" is intended herein that use of a catalyst containing the phosphorus-treated zeolite will produce less coke and gas than the same catalyst containing the same components but in which the zeolite has not been treated with the phosphorus compound. Suitable phosphorus compounds include phosphoric acid ($H_3PO_4$), phosphorous acid ($H_3PO_3$), salts of phosphoric acid, salts of phosphorous acid and mixtures thereof. Although any soluble salt of phosphoric acid or phosphorous acid such as alkali metal salts and ammonium salts may be used, it is preferable to use ammonium salts. Preferred phosphorous-containing compounds are monoammonium phosphate ($NH_4)H_2PO_4$, diammonium phosphate ($NH_4)_2HPO_3$; monoammonium phosphite ($NH_4)H_2PO_3$, diammonium phosphite ($NH_4)_2HPO_3$, and mixtures thereof. Suitable amounts of phosphorus to be incorporated with the zeolite include at least 0.1 wt. %, generally from 0.1 to 10 wt. %, preferably at least 0.2 wt. %, more preferably from 0.5 to 5 wt. %, calculated as elemental phosphorus, based on the weight of the zeolite. Contact of the zeolite with a liquid medium (such as water) comprising the phosphorus compound is suitably conducted at a pH ranging from 2.0 to 8.0. Suitable concentrations of the phosphorus compound in the liquid medium may range from 0.05 to 5 wt. %. Treating times and temperatures are not critical and may range from ambient temperature, that is, from 15.6°C to 121°C (60°F to 250°F). The phosphorus-treated zeolite is recovered from the liquid medium (dried, for example, at a temperature of 427°C (800°F) for 2 hrs.). Preferably, prior to contacting the zeolite with a phosphorus compound, the zeolite may be steam-treated by subjecting the zeolite to an atmosphere comprising from 5% to 100% steam, at a temperature ranging from 537.8 to 871.1°C (1000 to 1600°F) for a period of time ranging from 15 minutes to 100 hours. The pressure is not critical and may vary widely.

## THE INORGANIC OXIDE MATRIX COMPONENT

The inorganic oxide matrices suitable as component of the catalyst of the present invention are non-zeolitic inorganic oxides, such as silica, alumina, silica-alumina, magnesia, boria, titania, zirconia and mixtures thereof. The matrices may include one or more of various known clays, such as montmorillonite, kaolin, halloysite, bentonite, attapulgite and the like. Preferably, the inorganic oxide is a silica-containing matrix comprising a major amount of silica and a minor amount of an oxide of at least one metal of Groups IIA, IIIA, IVB of the Periodic Table of Elements. Most preferably, the inorganic oxide will be a non-zeolitic silica alumina. Suitable matrices include the type of matrices prepared from a sol such as described in U.S. Patent 3,867,308; U.S. Patent 3,957,689; and U.S. Patent 4,458,023. The matrix component may be present in the catalyst of the present invention in an amount ranging from about 40 to about 99 wt. %, preferably from about 50 to about 80 wt. %, based on the total catalyst. It is also within the scope of the invention to incorporate in the catalyst other materials to be employed in cracking catalysts such as various types of zeolites, clays, carbon monoxide oxidation promoters, etc.

## CATALYST PREPARATION

The catalyst of the present invention may be prepared by any one of several methods. The preferred method of preparing one of the catalyst of the present invention, that is a catalyst comprising a silica-alumina matrix and phosphorus-treated zeolite is to react sodium silicate with a solution of sulfuric acid and aluminum sulfate to form a silica-alumina sol. The phosphorus-treated zeolite component is added to this blend. Clay, alumina, silica, and other materials may be added to this blend, if desired. The zeolite is an ultrastable Y-type zeolite having a unit cell size below 2.45nm. A sufficient amount of each component is utilized to give the desired final composition. The resulting mixture is then sprayed dried to produce dried solids. The dried solids are subsequently reslurried in water and washed substantially free of undesired soluble salts. The catalyst is then dried to a residual water content of less than about 15 wt. %. The dried catalyst is recovered. The catalyst is suited for catalytic cracking of hydrocarbons.

Catalytic cracking with the catalyst of the present invention can be conducted in any conventional catalytic cracking manner. Suitable catalytic cracking conditions include a temperature ranging from 371° to 704°C (700 to 1300°F) and a pressure ranging from subatmospheric to several hundreds of atmospheres, typically from atmospheric to 689.6KPa gauge (100 psig). The process may be carried out in a fixed bed, moving bed, ebullating bed, slurry, transfer line or fluidized bed operation. The catalyst of the

EP 0 252 761 B1

present invention can be used to convert any of the conventional hydrocarbon feeds used in catalytic cracking, that is, it can be used to crack naphthas, gas oils and residual oils having a high content of metallic contaminants. It is especially suited for cracking hydrocarbons boiling in the gas oil range, that is, hydrocarbon oils having an atmospheric pressure boiling point ranging from 232°C to 593°C (450 to 1100°F) to yield products having a lower boiling point while producing less coke and gas.

DESCRIPTION OF THE PREFERRED EMBODIMENT

The following examples are presented to illustrate the invention.

Catalysts of the invention and comparative catalysts were prepared and tested for cracking activity in a standard microactivity test (MAT) described in the Oil and Gas Journal, 1966, Vol. 64, pages 7, 84, 85 and November 22, 1971, pages 60-68. The hydrocarbonaceous oil feedbacks used herein, designated Feedstock No. 1 and Feedstock No. 2, have the following characteristics:

|  | Feedstock No. 1 | Feedstock No. 2 |
|---|---|---|
| Gravity, °API at 60° | 26.2 | 22.5 |
| Distillation, °F | | |
| IBP | 583 | N.A. |
| 5% | 594 | 640 |
| 50% | 705 | 822 |
| 95% | 786 | -- |
| FBP | 802 | 995 |

EXAMPLE

A sample of ultrastable Y-type zeolite was steamed at 1400°F (760°C) for 16 hours and one atmosphere of steam partial pressure. Thirty grams of the steamed zeolite was then treated with an aqueous solution containing 66.7 grams of monoammonium phosphate (MAP) in 1000 cm³ of $H_2O$ for 2 hours at 150°F (65.6°C). The treated zeolite was dried and calcined for 2 hours at 1000°F (537.8°C). The MAP treated zeolite was then blended with sufficient silica-alumina gel (25 wt.% alumina) to prepare a catalyst containing 40 wt.% MAP-treated steamed zeolite and 60 wt.% silica-alumina gel. This catalyst is, herein, designated catalyst A.

Another catalyst, designated catalyst B, was also prepared in accordance with the procedure for preparing catalyst A.

A comparative catalyst, herein designated catalyst C, was made the same way the same components except that the zeolite was not treated with MAP.

All three catalysts A, B and C were steamed at 1400°F (760°C) for 16 hours at one atmosphere steam partial pressure to simulate equilibration in a commercial regenerator. The three catalysts A, B and C were tested in a microactivity test (MAT) using Feedstock No. 1 and Feedstock No. 2. The MAT results are given in Table 1.

4

|  | Catalysts of the Invention | | Comparative Catalyst |
|  | Catalyst A | Catalyst B | Catalyst C* |
|---|---|---|---|
| **Feedstock No. 1** | | | |
| MAT | | | |
| (1) Conversion, LV% | 62.8 | 63.9 | 65.8 |
| C, Wt.% | 1.31 | 1.36 | 1.55 |
| $H_2$, Wt.% × 100 | 3.1 | 2.9 | 3.3 |
| | | | |
| **Feedstock No. 2** | | | |
| MAT | | | |
| (1) Conversion, LV% | 74.0 | 74.1 | 75.3 |
| C, Wt.% | 2.69 | 2.97 | 3.76 |
| $H_2$, Wt.% × 100 | 4.7 | 4.4 | 4.1 |

_____

(1) Conversion to 400°F⁻ (204.4°C⁻)

\*Catalyst C is not in accordance with the invention.

As can be seen from Table 1, the tests using catalysts A and B of the invention gave less coke than the tests using catalyst C.

Conversion of Units

In this patent specification, the following conversions of units are used:
- A micron is $1 \times 10^{-6}$ m.
- Temperature in °F is converted to equivalent °C by subtracting 32 and then dividing by 1.8.
- Gauge pressure is psig (pounds per square inch gauge) is converted to equivalent kPa by multiplying by 6.895.

**Claims**

1. A catalyst comprising: (a) a non-zeolitic inorganic oxide matrix, and (b) an ultrastable Y-type crystalline zeolite having a unit cell size below 24.5 Å (2.45nm), said zeolite having been pretreated by contacting said zeolite with a phosphorus compound selected from phosphoric acid, phosphorous acid, a salt of phosphoric acid, a salt of phosphorous acid, and mixtures thereof for a time sufficient to composite an effective amount of phosphorus with said zeolite.

2. The catalyst of claim 1 wherein said zeolite, before being contacted with said phosphorus compound, is subjected to an atmosphere comprising from 5 mol percent to 100 mol percent steam at a temperature ranging from 1000 to 1600° F (537.8 to 871.1° C).

3. The catalyst of claim 1 or claim 2 wherein said phosphorus compound is selected from an ammonium salt of phosphoric acid, an ammonium salt of phosphorous acid and mixtures thereof.

4. The catalyst of any one of claims 1 to 3 wherein said phosphorus is composited with said zeolite in an amount of at least 0.1 weight percent, based on the weight of the zeolite, calculated as elemental phosphorus.

5

EP 0 252 761 B1

5. The catalyst of any one of claims 1 to 4 wherein said matrix is selected from silica, alumina, silica-alumina, magnesia, zirconia, titania, boria, chromia and mixtures thereof.

6. The catalyst of any one of claims 1 to 5 wherein said zeolite is present in an amount ranging from about 1 to about 40 weight percent, and wherein said phosphorus is present in an amount ranging from 0.5 to 5 weight percent based on said zeolite, and wherein said matrix comprises silica and alumina.

7. A process for the catalytic cracking of a hydrocarbon feed which comprises contacting said feed at catalytic cracking conditions with a catalyst according to any one of claims 1 to 6.

**Revendications**

1. Un catalyseur comprenant a) une matrice d'oxyde minéral non zéolithique possédant une dimension de maille inférieure à 245 Å (2,45 nm) et b) une zéolithe cristalline ultrastable de type Y, ladite zéolithe ayant été prétraitée par mise en contact de ladite zéolithe avec un composé phosphoré choisi parmi l'acide phosphorique, l'acide phosphoreux, un sel d'acide phosphorique, un sel d'acide phosphoreux et leurs mélanges, pendant un temps suffisant pour combiner une quantité efficace de phosphore avec ladite zéolithe.

2. Le catalyseur selon la revendication 1, dans lequel ladite zéolithe, avant sa mise en contact avec ledit composé phosphore, est exposé à une atmosphère comprenant 5 pourcent molaire à 100 pourcent molaire de vapeur à une température s'étendant de 1000 à 1600° F (537,8 à 871,1° C).

3. Le catalyseur selon la revendication 1 ou 2, dans lequel ledit composé phosphoré est choisi parmi un sel d'ammonium d'acide phosphorique, un sel d'ammonium d'acide phosphoreux et leurs mélanges.

4. Le catalyseur selon l'une quelconque des revendications 1 à 3, dans lequel ledit phosphore est combiné avec ladite zéolithe en une quantité d'au moins 0,1 pourcent en poids par rapport au poids de la zéolithe, calculé en phosphore élémentaire.

5. Le catalyseur selon l'une quelconque des revendications 1 à 4, dans lequel ladite matrice est choisie parmi la silice, l'alumine, la silice-alumine, la magnésie, la zircone, l'oxyde de titane, l'oxyde de bore, le sesquioxyde de chrome et leurs mélanges.

6. Le catalyseur selon l'une quelconque des revendications 1 à 5, dans lequel ladite zéolithe est présente en une quantité s'étendant d'environ 1 à environ 40 pourcent en poids, ledit phosphore est présent en une quantité s'échelonnant de 0,5 à 5 pourcent en poids par rapport à ladite zéolithe et dans lequel ladite matrice contient de la silice ou de l'alumine.

7. Un procédé pour le craquage catalytique d'une charge hydrocarbonée consistant à mettre ladite charge en contact dans des conditions de craquage catalytique, avec un catalyseur selon l'une quelconque des revendications 1 à 6.

**Ansprüche**

1. Katalysator, der (a) eine nicht-zeolithische anorganische Oxidmatrix und (b) einen kristallinen ultrastabilen Zeolith vom Y-Typ mit einer Einheitszellengröße kleiner als 2,45 nm (24,5 Å) umfaßt, wobei der Zeolith durch Kontaktieren mit einer Phosphorverbindung ausgewählt aus Phosphorsäure, phosphoriger Säure, einem Phosphorsäuresalz, einem Salz der phosphorigen Säure und Mischungen davon über einen zum Verbund einer wirksamen Menge Phosphor mit dem Zeolith ausreichenden Zeitraum vorbehandelt worden ist.

2. Katalysator nach Anspruch 1, bei dem der Zeolith, bevor er mit der Phosphorverbindung kontaktiert wird, bei einer Temperatur im Bereich von 537,8 bis 871,1° C (1000 bis 1600° F) einer Atmosphäre ausgesetzt wird, die 5 Mol% bis 100 Mol% Dampf enthält.

3. Katalysator nach Anspruch 1 oder 2, bei dem die Phosphorverbindung ausgewählt ist aus einem Ammoniumsalz der Phosphorsäure, einem Ammoniumsalz der phosphorigen Säure und Mischungen davon.

4. Katalysator nach einem der Ansprüche 1 bis 3, bei dem der Phosphor mit dem Zeolith in einer Menge von wenigstens 0,1 Gew.%, bezogen auf das Gewicht des Zeolith und berechnet als elementarer Phosphor, vermischt wird.

5. Katalysator nach einem der Ansprüche 1 bis 4, bei dem die Matrix ausgewählt ist aus Siliciumdioxid, Aluminiumoxid, Siliciumdioxid-Aluminiumoxid, Magnesiumoxid, Zirkondioxid, Titandioxid, Boroxid, Chromoxid und Mischungen davon.

6. Katalysator nach einem der Ansprüche 1 bis 5, bei dem der Zeolith in einer Menge im Bereich von etwa 1 bis etwa 40 Gew.% vorhanden ist und bei dem der Phosphor in einer Menge im Bereich von 0,5 bis 5 Gew.%, bezogen auf den Zeolith, vorhanden ist und bei dem die Matrix Siliciumdioxid und Aluminiumoxid enthält.

7. Verfahren zum katalytischen Cracken eines Kohlenwasserstoffeinsatzmaterials, bei dem das Einsatzmaterial unter katalytischen Crackbedingungen mit einem Katalysator gemäß einem der Ansprüche 1 bis 6 kontaktiert wird.